# EUROPEAN PATENT APPLICATION

(11) **EP 2 772 487 A1**
(43) Date of publication of application: **03.09.2014**
(21) Application number: 13157033.5
(22) Date of filing: 27.02.2013
(51) Int. Cl.: C07D 277/10, C07D 339/06, A01N 43/28, A01N 43/78, A01P 17/00

(54) **Alarm pheromones and use thereof**

(71) Applicant: Université de Lausanne, 1011 Lausanne (CH)
(72) Inventor: Broillet, Marie-Christine, 1005 Lausanne (CH); Brechbühl, Julien, 1020 Renens (CH)
(74) Representative: KATZAROV S.A.

(57) **Abstract**

The present invention relates to compounds of formula I for use as alarm pheromones and in particular against an animal attacking other animals or humans and their households inducing freezing or running away of the attacking animal or as a pest control or to disperse crowd. 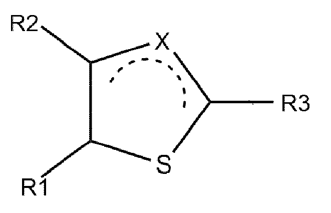 wherein X is N or S; R1, R2, and R3 are each independently selected from the group comprising H, (C ₁-C ₈)alkyl, substituted (C ₁-C ₈)alkyl, -CH ₂OH, -CH2OCH ₃, -CH2OCH2CH ₃, - CH(OH)CH ₂ OH, or -(CH(OH))₃CH₂OH.

## Description

### FIELD OF THE INVENTION

The present invention relates to compounds for use as alarm pheromones and in particular against an animal attacking other animals or humans and their households inducing freezing or running away of the attacking animal or as a pest control or to disperse crowd.

### BACKGROUND OF THE INVENTION

In their continuous struggle for survival, predator and prey species interact to maximize the likelihood to find food or avoid being eaten. Preys have adapted to deal with dangerous encounters using specialized sensory systems. Detection of auditory signals, visual signs and olfactory messages induce elaborate and innate survival behaviors in the prey, which can either hide, fight or flight (1). Multiple hiding strategies (crypsis) coexist and are best when combined. Indeed, crypsis can be morphological when the prey uses its body shape/color to blend into the background (camouflage) or behavioral using immobility or subtle steady movements decreasing the chance to be detected (freezing) or chemical when the prey releases odorant molecules to mask its own odor (2).

The olfactory messages communicating the presence of a danger to the prey are the scents naturally released in the environment by the predators, named kairomones (3) and the alarm pheromones (APs) secreted by threatened or injured conspecifics (4). Intraspecies communication by APs is an evolutionary widespread phenomenon, presumably occurring in all animal phyla. Social species of fish, insects, and mammals use APs secretion as an altruistic signal to protect their colony/group or family when in danger. These alert cues may derive from compounds that evolved to make the flesh unpalatable or toxic to predators. Their primary function could have been the control of skin pathogens. In insects and fish, APs of variable chemical structures such as terpenes, hydrocarbons, ketones or nitrogen/sulfated heterocyclic compounds have been identified (4).

In mammals, the chemical structure of APs is still unknown but to fulfill their sensory warning role, they should be volatile, hydrophilic and short-lived molecules (5).

### BRIEF DESCRIPTION OF THE INVENTION

This object has been achieved by providing a compound of general formula I 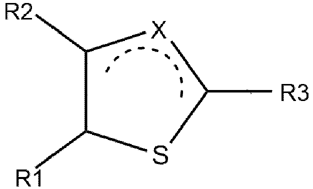 or one of its salts, solvates, tautomers, isomers for use as an alarm pheromone.

A further object of the present invention is to provide a pharmaceutical composition containing an alarm pheromone of the invention as active pharmaceutical ingredient, and optionally in combination with one or more pharmaceutically acceptable carriers.

Another object of the invention is the uses of an alarm pheromone of the invention, or a pharmaceutical composition of the invention, against an animal attacking humans inducing freezing or running away of the attacking animal or as a pest control or to disperse crowd.

A delivery device for providing an alarm pheromone of the invention, the delivery device comprising a carrier device containing said alarm pheromone, the carrier device being structured for attachment to or positioning in proximity to a material or article commonly used in human or animal habitation.

Further object of the invention is to provide a carrier device treated or impregnated with an alarm pheromone the invention.

Still a further object of the invention is to provide a composition for treating materials and articles used in human and animal habitation to provide animal dispersion of the treated materials and articles, the composition containing an effective amount of an alarm pheromone of the invention.

### DESCRIPTION OF THE FIGURES

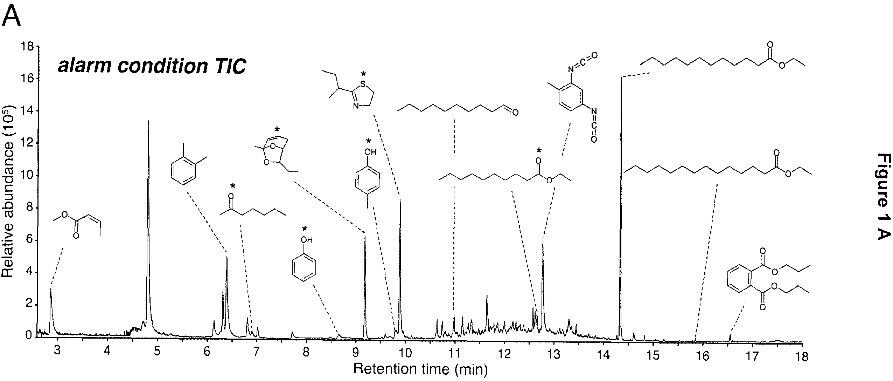

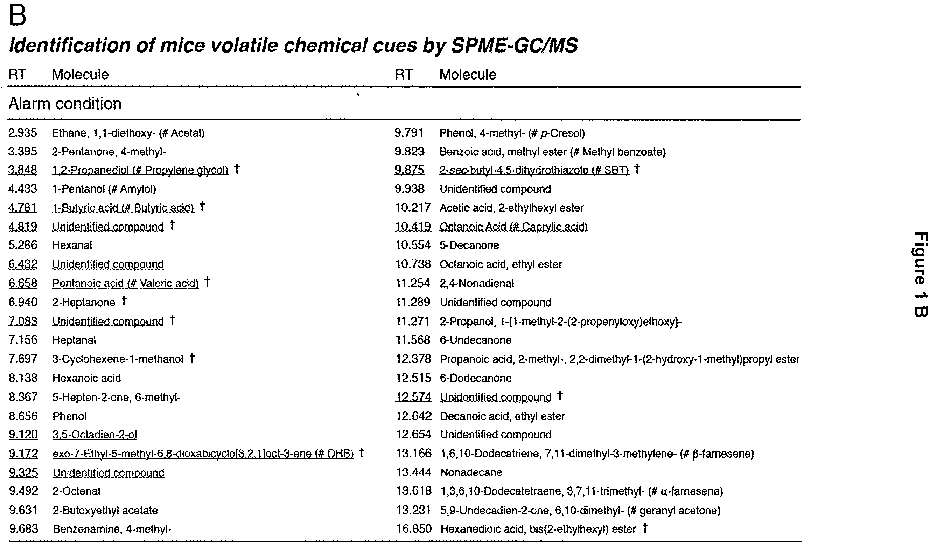

**Fig. 1****.** Chemical identification of candidate mouse alarm pheromones. (*A*) Representative total ion chromatogram (TIC) of volatiles emitted by mice under alarm condition obtained by SPME-GC/MS. Chemical general formula s of a selection of volatiles emitted by mice (*) or background volatiles are indicated above peaks. A mix of five adult male and female (3:2) mice under lethal CO₂ stress were used for this experiment. (*B*) Forty-four mouse volatiles were detected in our experimental conditions. The volatiles are listed according to their retention time (RT). Both the chemical nomenclature and the usual names (#) are mentioned. The names of the compounds detected but not found in the Wiley7N or the NIST08 libraries are mentioned as "Unidentified compound". Underlined, are the twelve chemicals appearing only under alarm condition. Short-lived molecules (compounds not generated 30 minutes after the death of the mice) are indicated by (†).

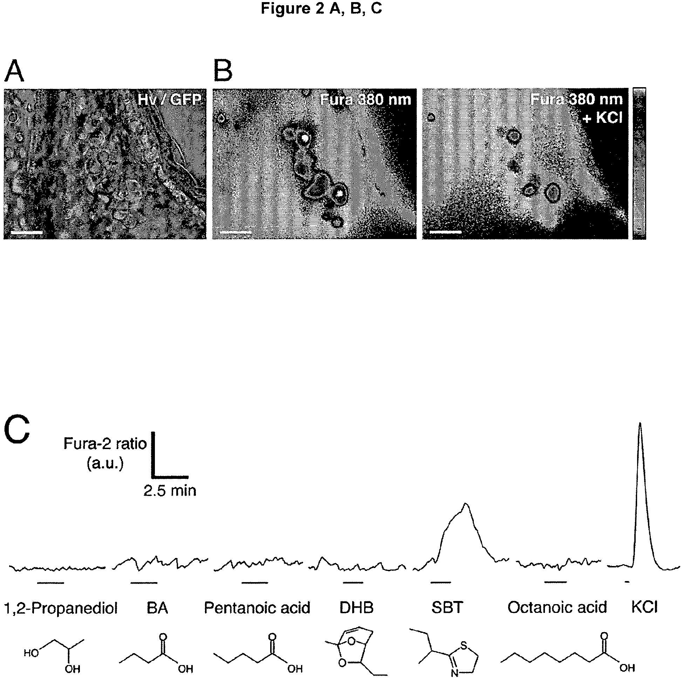

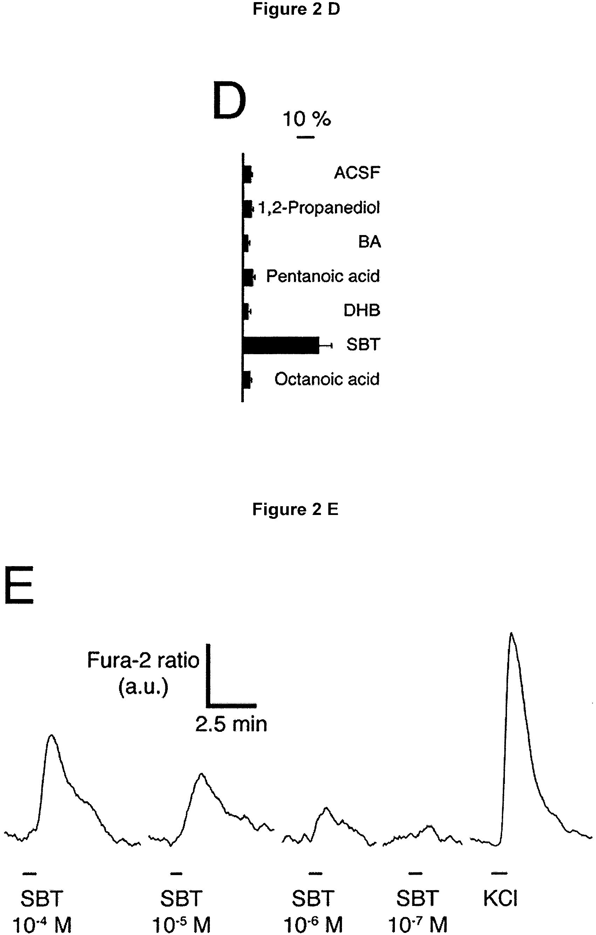

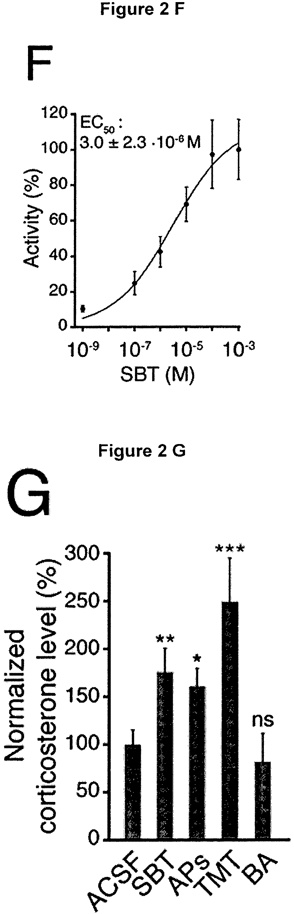

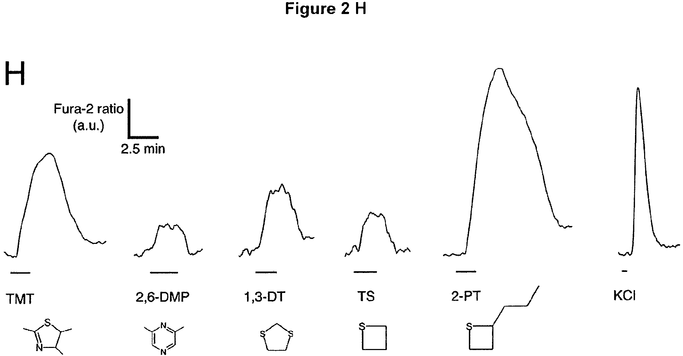

**Fig. 2****.** GG neurons are activated by alarm pheromones and predator kairomones that share a common chemical structure. (*A*) GG coronal slice from an OMP-GFP mouse where GG neurons can be observed with their intrinsic GFP fluorescence. (*B*) Uptake of Fura-2AM into GG neurons measured at 380 nm in color encoded map for unbound Fura before and at the peak of an intracellular calcium increase induced by a control pulse of KCl (20 mM). (*C*) SBT (10⁻⁴ M) induced a reversible calcium transient in GG neurons. The other identified volatile chemical cues emitted by mice 1,2-Propanediol, BA, Pentanoic acid, DHB and Octanoic acid (used as a long lasting volatile control) perfused at the same concentration had no effect. (D) SBT emerged as the best candidate alarm pheromone from the normalized responses to KCl (20 mM). (E) SBT responses were observed over a broad range of concentrations (shown here from 10⁻⁴ to 10⁻⁷ M). (*F*) Dose-response representation of the neuronal percentage of activity for SBT; EC₅₀ value for SBT calculated from the Hill equation: 3.0 ± 2.3 · 10⁻⁶ M (*n* = 7). (G) Exposure to SBT, blend of APs and TMT, a component of fox feces, induce systemic stress responses measured by the elevation of the plasma corticosterone level normalized to the control ACSF solution (62.8 ± 7.3 ng/ml). BA, used here as an aversive control substance, did not induce any hormonal increase. Error bars, SEM of *n* = 6 to 15 observations, **P* < 0.05; ***P* < 0.01; ****P* < 0.001; ns, not significant. (*H*) Representative calcium transients induced by five volatile predator kairomones (TMT, 2,6-DMP, 1,3-DT, TS, 2-PT; here shown at 10⁻⁴ M) in mouse GG neurons from male and female mice. Corresponding chemical general formula s are indicated below the names of the compounds. Fura-2 ratio is indicated with arbitrary units (a.u.). Perfusion times are indicated by horizontal bars. Scale bars, 20 µm.

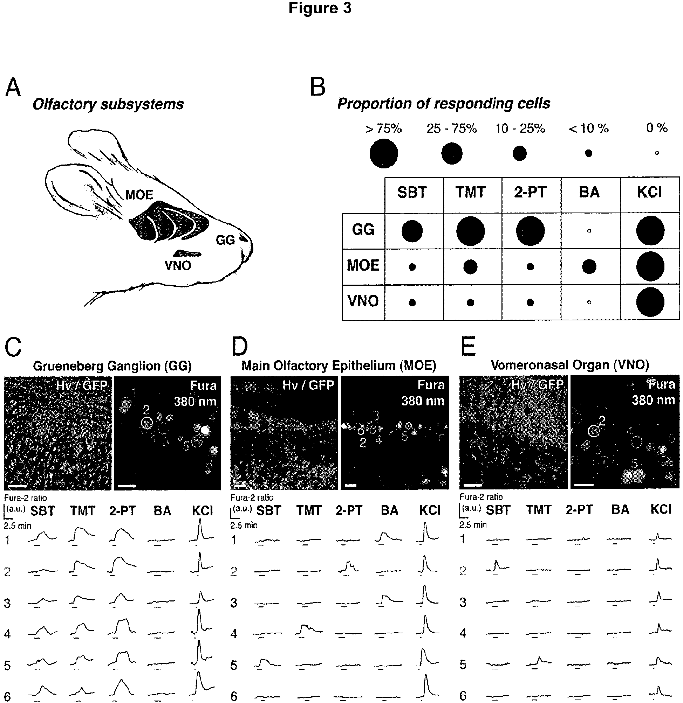

**Fig. 3****.** The chemical danger cues recognition shows an olfactory subsystem specificity. (*A*) Schematic representation of a mouse head with the localization of the different olfactory subsystems (main olfactory epithelium, MOE; vomeronasal organ, VNO and Grueneberg ganglion, GG). (*B*) Comparative table of neuronal activation showing strong olfactory subsystem dependence. SBT, TMT and 2-PT (10⁻⁴ M) activated 72%, 97% and 100% of the tested GG neurons respectively (n = 114). The same cues activated 7 %, 12 % and 4 % of MOE neurons respectively (n = 124) and 5 %, 2 % and 1% of VNO neurons (n = 153). The aversive odorant BA (10⁻⁴ M) used here as a control induced calcium transients in 15 % of MOE neurons (n = 124) but no activation of GG neurons (n = 19) or VNO neurons (n = 78). Decreasing the concentration of SBT perfused to 10⁻⁶ M still activated 2 % of MOE neurons and 57 % of GG neurons. (*C*) Six representative GG neurons (numbered circles) observed after the uptake of Fura-2AM, were tested for activation. The different danger cues (SBT, TMT and 2-PT) activated the majority of GG neurons tested whereas BA did not. Similar investigations as in (*C*) were performed on MOE (D) and VNO (E). Fura-2 ratio is indicated with arbitrary units (a.u.). Perfusion times are indicated by horizontal bars. Scale bars, 20 µm.

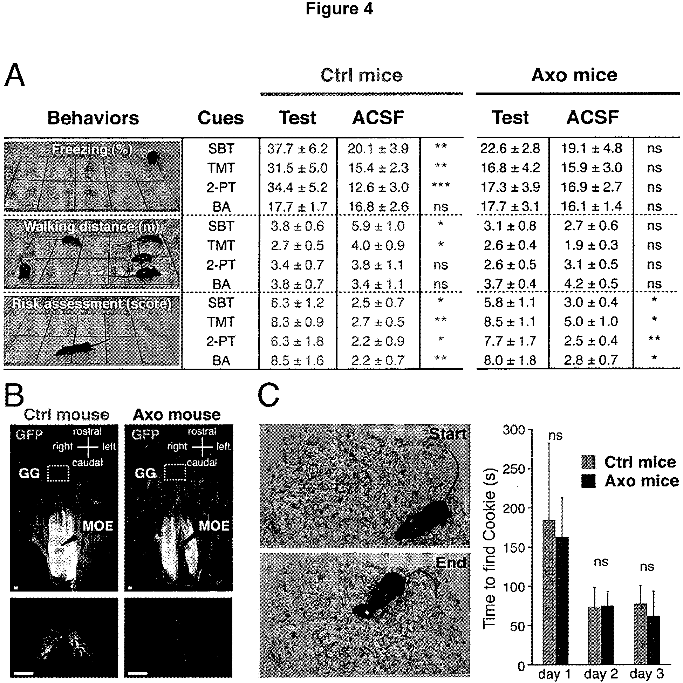

**Fig. 4****.** Detection of chemical danger cues depends on a functional GG. (*A*) Behavioral experiments involving control (Ctrl; *n* = 6) and axotomized (Axo; *n* = 6) mice exposed successively for 5 min to a chemical cue (Test: SBT, TMT, 2-PT, BA) and to ACSF deposited on a blotting paper (blue square). The percentage of freezing time (%) and the walking distance (m) show that SBT as well as TMT and 2-PT but not BA induced a stereotyped fear behavior abolished after axotomy. On the other hand, the scoring of risk assessment episodes was not affected by axotomy. (*B*) Mice phenotyping. Ventral whole-mount of the nasal cavities of a Ctrl (left) and of an Axo (right) OMP-GFP mouse (fluorescent view). The GG (white rectangles enlarged) and MOE regions are shown. (*C*) The general olfactory function was not affected by axotomy. No difference was observed between the two phenotypes in the latency to find a buried Oreo cookie in the bedding over three consecutive days. Ctrl mice (grey bars) and Axo mice (black bars). Mean ± SEM of *n* = 6, **P* < 0.05; ***P* < 0.01; ****P* < 0.001; ns, not significant. Scale bars, 0.25 mm.

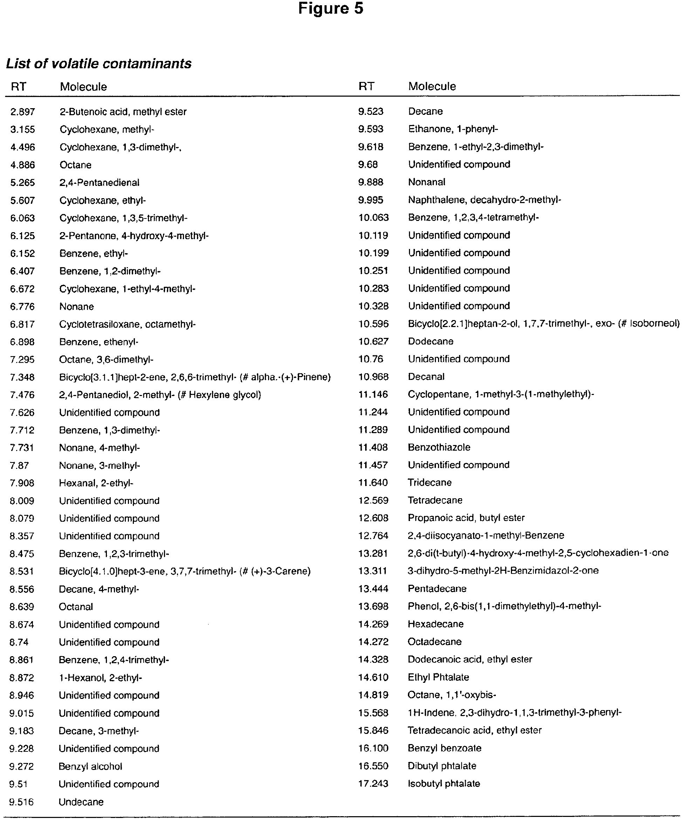

**Fig. 5****.** List of volatile contaminants. During the SPME-GC/MS experiments, volatile contaminants were identified. They are listed here and they originate principally from the equipment used (cage, column). The volatiles are listed according to their retention time (RT). Both the chemical nomenclature and the usual names (#) are mentioned.

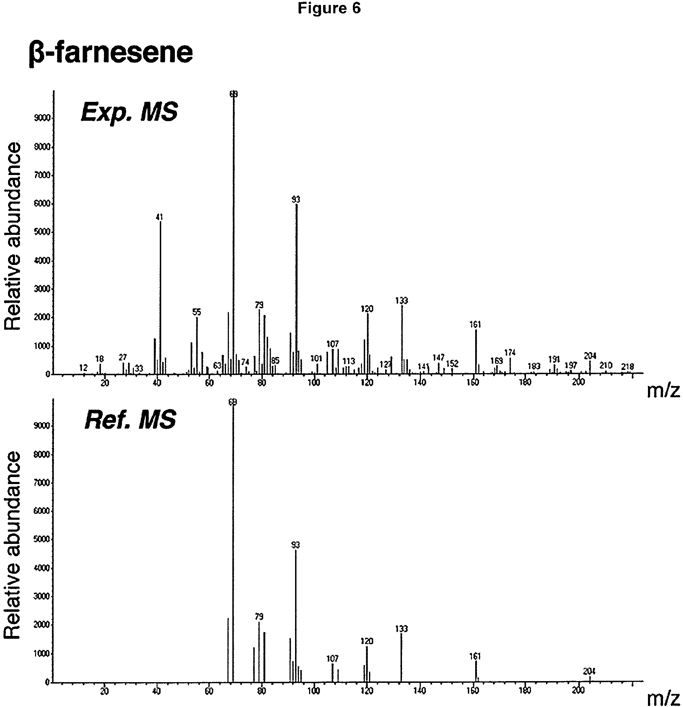

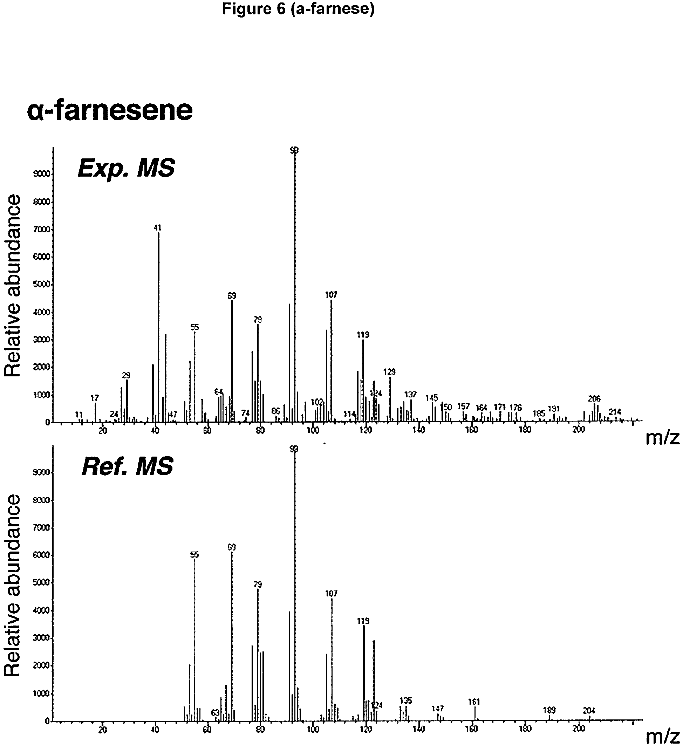

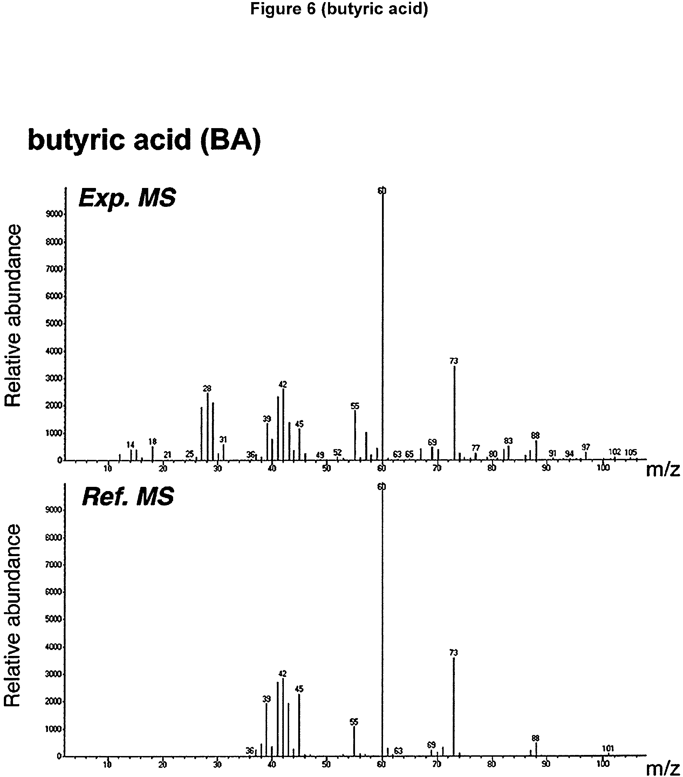

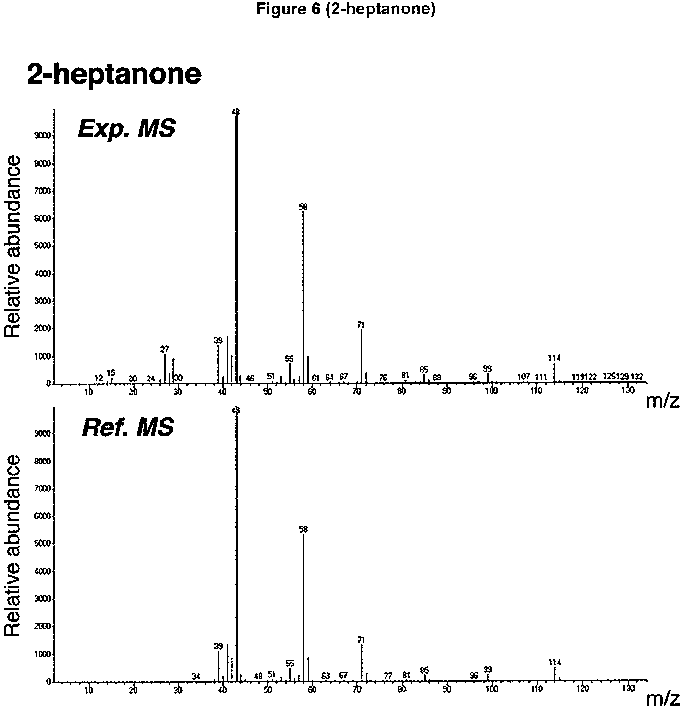

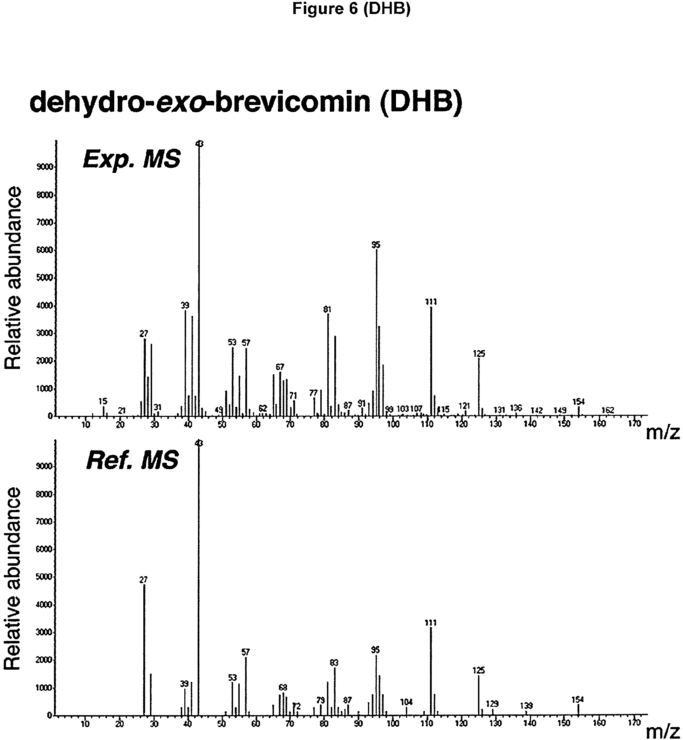

**Fig. 6****.** Comparison of experimental and reference mass spectra of mice volatile pheromones. Representative experimental (Exp. MS; in black) and reference (Ref. MS; in blue, from Wiley7N library) mass spectra of mice volatile pheromones. Mass spectra of 2-heptanone (MW = 114), α-famesene (MW = 204), β-farnesene (MW = 204), DHB (MW = 154) and BA (MW = 88) are shown. The relative abundance and the mass charge ratio (m/z) are graphically indicated.

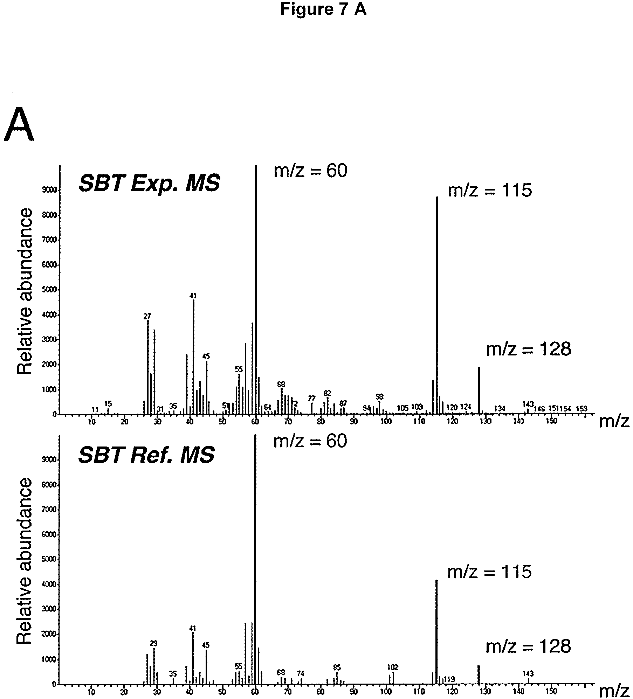

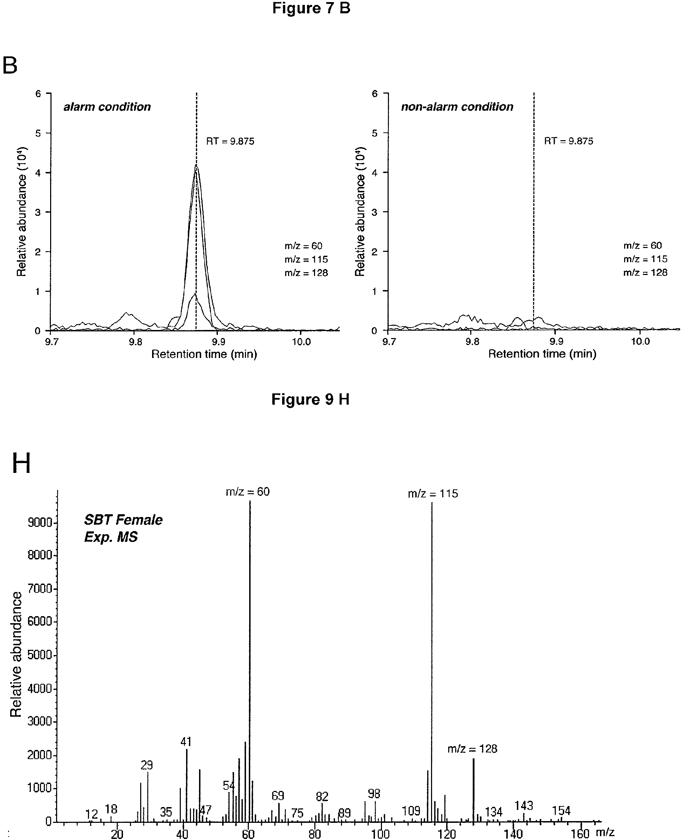

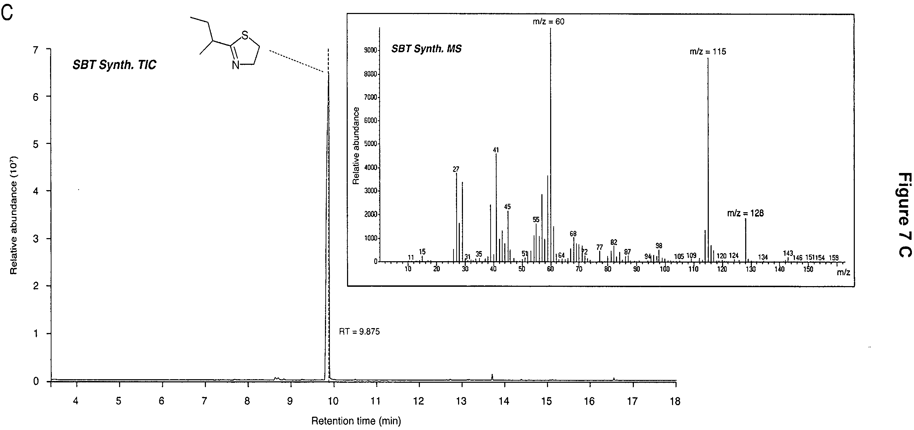

**Fig. 7****.** Representative chemical identification of a volatile candidate mouse alarm pheromone. (A) Precise GC/MS analysis of the SPME fiber extracted components identifies chemicals thanks to their retention time and m/z spectra. SBT identification is shown here as an example. Experimental mass charge ratio (m/z) spectra (Exp. MS) is compared with the reference spectra (Ref. MS) of the WileyN7 Mass Spectral library leading to characteristic m/z values of 60, 115, 128 corresponding to SBT. (B) According to these chemical criteria at a retention time (RT) of 9.875, SBT is present in alarm conditions only, shown here for a lethal CO₂ stress. (C) Synthesized SBT has similar m/z spectrum and RT (identified as a single peak) as referenced and experimental SBT.

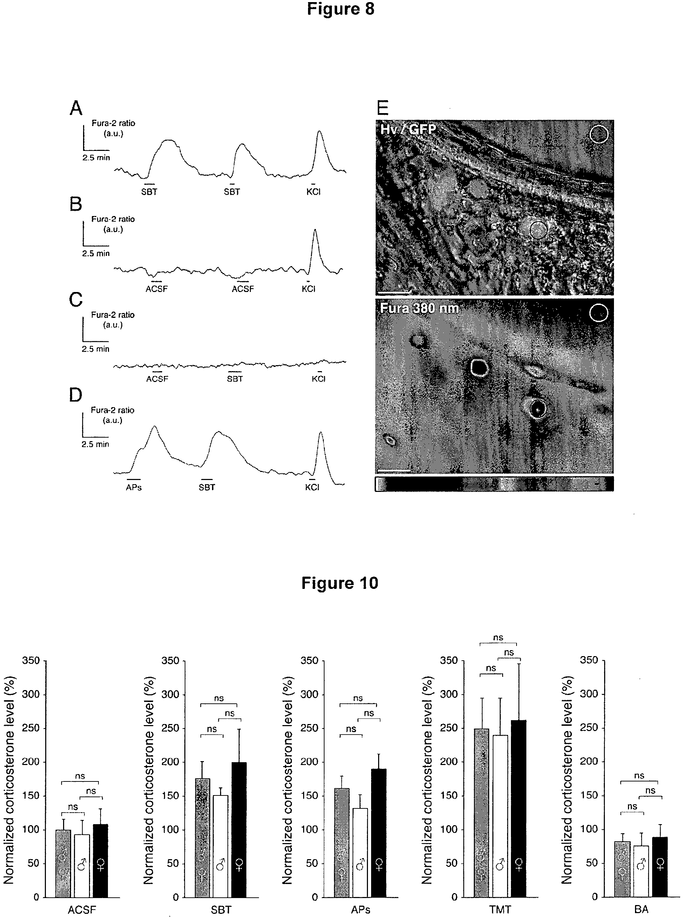

**Fig. 8****.** SBT activates APs sensitive mouse GG neurons both reversibly and reproducibly. (A) Representative reversible calcium transients induced by 2 pulses of SBT (10⁻⁴ M) in a GG neuron from a female mouse (P26). (B) Pulses of ACSF used to determine the baseline activity in the neuron shown in (A). (C) Control recording of a selected region without cells (white circle in (E)) during the perfusion of ACSF and SBT (background activity). (D) Example of calcium transients induced by the perfusion of a blend of mouse alarm pheromones (APs) and by SBT (10-4 M) in a GG neuron (black circle in (E)) from a male mouse (P9). (E) GG coronal slice from the OMP-GFP male mouse shown in (C) and (D) where GG neurons can be observed with their intrinsic GFP fluorescence (upper panel). Uptake of Fura-2AM into GG neurons measured at 380 nm in a color-encoded map for unbound Fura (lower panel). Fura-2 ratio is indicated with arbitrary units (a.u.). Perfusion times are indicated by horizontal bars. Scale bars, 20 µm.

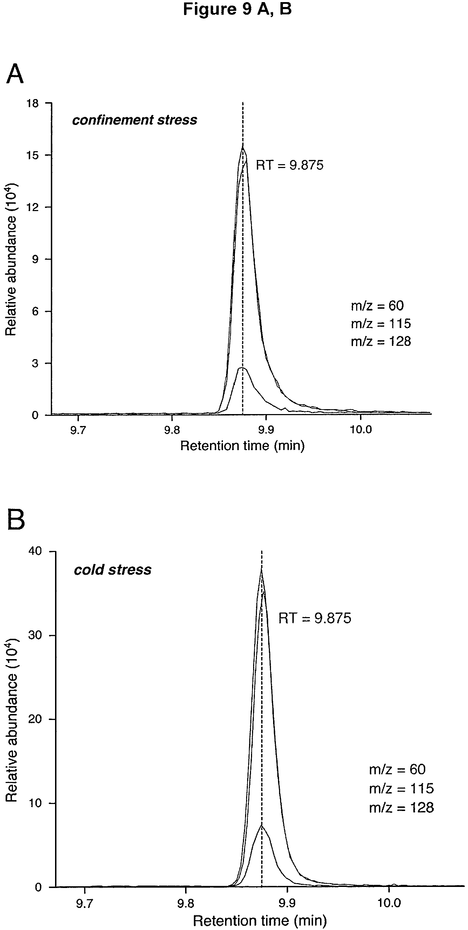

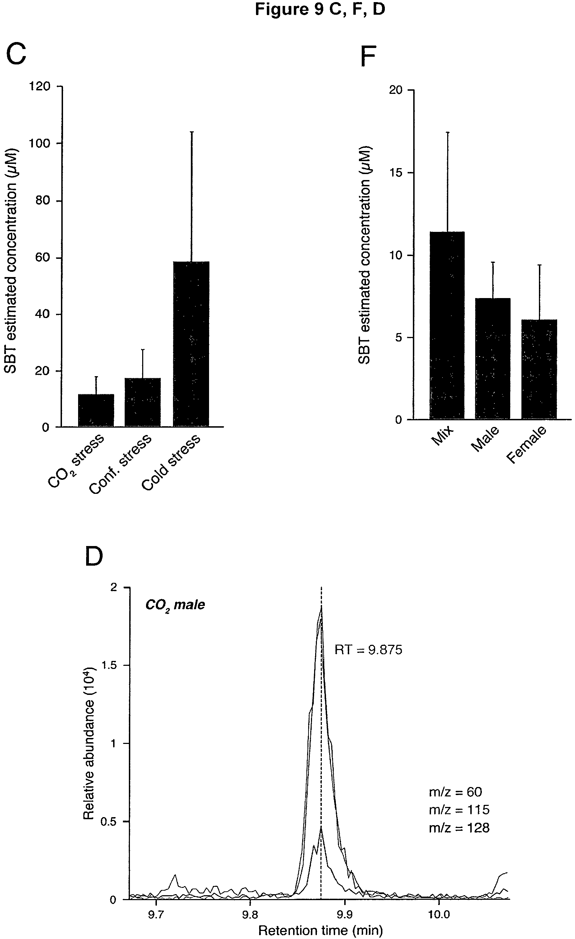

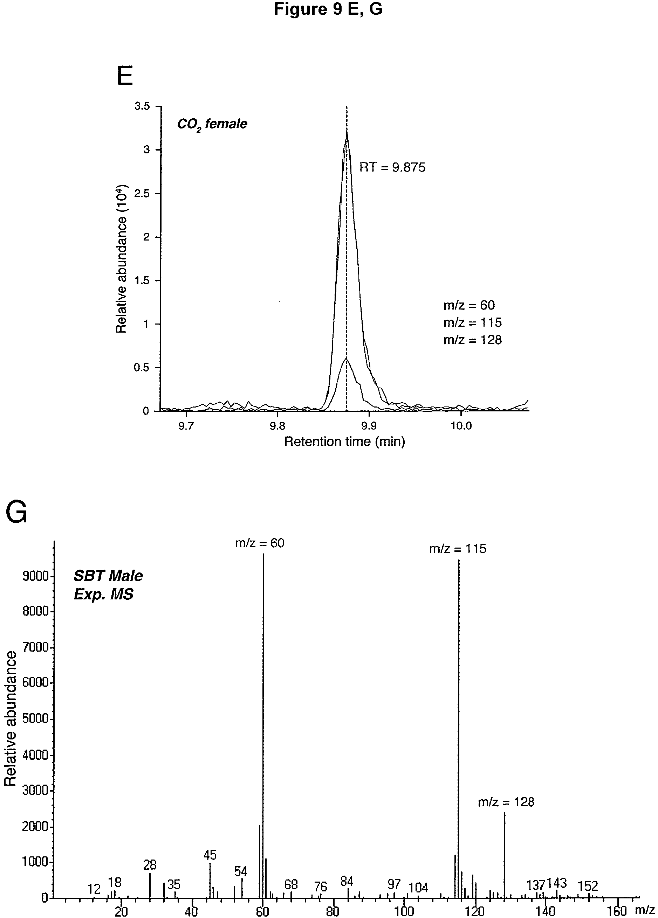

**Fig. 9****.** Female and male mice under different alarm conditions release SBT. (A-C) SBT production by a mix of male and female mice (3:2), identified by its chemical criteria (RT = 9.875 and mass charge ratio m/z values of 60, 115, 128), during a confinement stress ((A); n experiments = 5) or a cold stress ((B); n experiments = 3). (C) Estimated SBT concentration released under different alarm conditions: CO₂ euthanasia (n experiments = 7), confinement or cold stress conditions. (D-E) Detection of SBT produced by male (D) or female (E) mice, under CO₂ alarm condition. (F) Estimated concentration of SBT released either by a mix of male and female mice (n experiments = 7), male mice (n experiments = 2) or female mice (n experiments = 3) under CO₂ alarm condition. (G-H) Representative experimental m/z spectra obtained for male (G) or female (H) mice under CO₂ alarm condition. Five adult mice were used for each experiment.
**Fig. 10****.** The plasmatic corticosterone level increase is sex-independent. Corticosterone levels measured in male (white bars) and female mice (black bars) from the mixes of both male and female mice (grey bars; from Fig. 2G) after exposure to ACSF, SBT, APs, TMT and BA. For each tested cues, no significant gender difference was observed. Error bars, SEM of n = 3 to 15 observations, *P < 0.05; **P < 0.01; ***P < 0.001; ns, not significant.

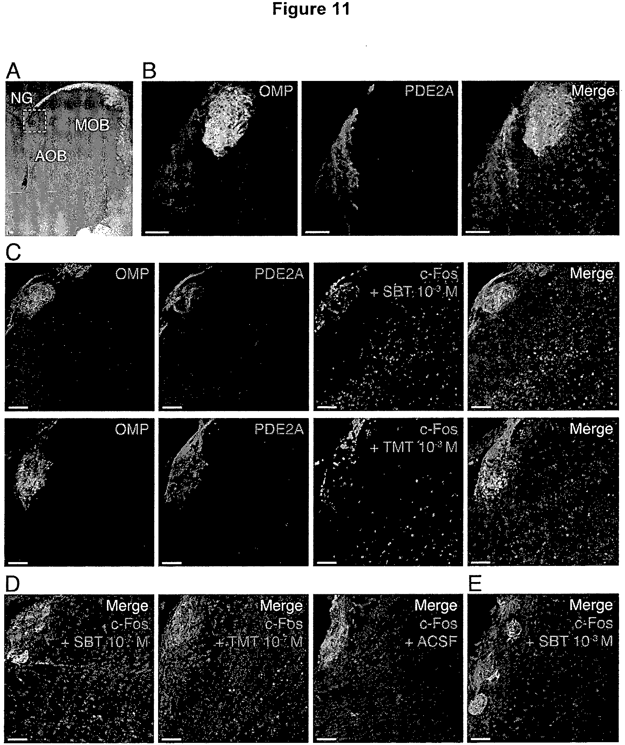

**Fig. 11****.** Olfactory bulb activities associated with GG chemical stimulation. (A) Sagittal view of an olfactory bulb from an OMP-GFP mouse (male, P21). The intrinsic GFP fluorescence allowed the visualization of the glomeruli from the main olfactory bulb (MOB), accessory olfactory bulb (AOB) and the necklace glomeruli region (NG, indicated by a dashed white square). (B) PDE2A expression allowed the identification of a GG associated glomerulus in the NG region. (C-D) SBT or TMT (10⁻³ M in (C) and 10⁻⁷ M in (D)) induced the expression of c-Fos in the NG associated mitral/tufted and granule cells. As a control of basal activity, the same procedure was repeated with ACSF stimulation. (E) For comparison, no increase of c-Fos labeling was detected in the apical MOB, a negative region for PDE2A, after stimulation with SBT (10⁻³ M). In merge views (Merge), DAPI was used for nuclear counterstaining. Scale bars are 100 µm in (A) and 50 µm in (B-E).

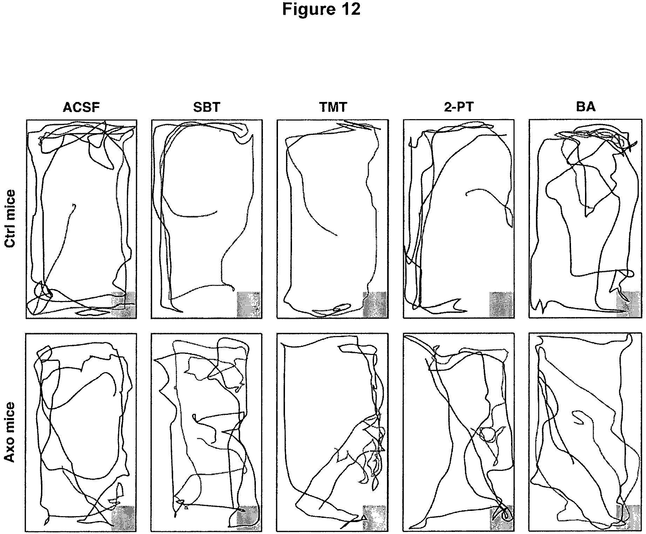

**Fig. 12****.** Influence of chemical cues on the walking distance covered by mice. Representative tracking of the walking distance covered by mice in the test chamber during a 3-minute session in the presence of different chemical cues (blue square: ACSF, SBT, TMT, 2-PT and BA as an aversive control) for Ctrl and Axo mice. Tracking of the first minute of the session is indicated in red. The decrease in walking distance observed in the presence of SBT, TMT and 2-PT in Ctrl mice was replaced by exploratory activity in Axo mice.

### DESCRIPTION

Using CO₂ euthanasia known to cause a major alarm condition (5), the Applicants previously collected mouse APs as a blend and identified the sensory system involved in their detection (5). Applicants showed that the blend of mouse APs induce calcium transients specifically in the neurons of the Grueneberg ganglion (GG), an olfactory subsystem present at the tip of the nose, close to the opening of the naris (5, 6). The mouse GG is an arrow-shaped neuronal structure 750 to 1000 µm in length. It lines both sides of the nasal septum and comprises 300 to 500 cells. Each cell sends out a single axon, and axons fasciculate immediately as they project caudally along the dorsal roof of the nasal cavity to the necklace complex in the olfactory bulb (7, 8). The GG displays multi-modal properties (5, 9) and starts developing around embryonic day 16. Contrary to the other olfactory subsystems, the GG appears to be complete and functional at birth (8, 10-13) insuring immediate APs sensing and increasing chances of survival in the wild. An intact GG is necessary to observe the fearful behavior of the recipient animals in the presence of APs (5).

The Applicants have collected and chemically identified volatile mouse pheromones by a solid phase microextraction followed by a gas chromatography and mass spectrometry method. They further assessed their alarm sensory function by calcium imaging and behavioral experiments leading to the identification of mouse alarm pheromones, in particular 2-sec-butyl-4,5-dihydro-1,3-thiazole. This alarm cue produced by both male and female mice under different alarm conditions resembles the sulfur-containing volatiles present in predator scents, in particular the methylpyrazines (2,6-DMP: 2,6-dimetylpyrazine; 2,3-DMP: 2,3-dimethylpyrazine), dithiolanes (1,3-DT: 1,3-dithiolane) and thietanes (TS: trimethylene sulfide; 2-PT: 2-propylthietane).

Thus, these alarm cues belong to a class of volatile heterocyclic sulfur or nitrogen-containing compounds generated by meat digestion specifically recognized by the neurons of the Grueneberg ganglion.

Interestingly, this shared chemical feature that signal danger is specifically deciphered by the olfactory Grueneberg ganglion. The present invention thus relates to a class of volatile heterocyclic sulfur or nitrogen-containing compound of general formula I 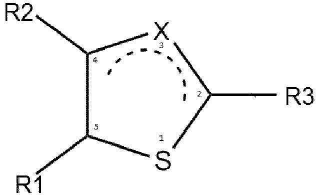 wherein X is N or S; R1, R2, and R3 are each independently selected from the group comprising H, (C₁-C₈)alkyl, substituted (C₁-C₈)alkyl, -CH2OH, -CH2OCH3, -CH2OCH2CH3, -CH(OH)CH2OH, or -(CH(OH))3CH2OH, for use as an alarm pheromone.

As used herein, 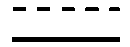 independently represents a single bond or a double bond. It is evident that the selection of the two should lead to a compound having sufficient stability for pharmaceutical applications. Therefore, in a first preferred alternative one 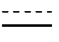 is a double bond between positions 3 and 2 and the other 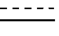 is a single bond between positions 3 and 4 or in a second preferred alternative one 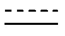 is a double bond between positions 3 and 4 and the other 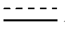 is a single bond between positions 3 and 2.

Alternatively, when X is S, both 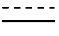 are a single bond.

As used herein, the term "comprise/comprising" is generally used in the sense of include/including, that is to say permitting the presence of one or more features or components. The terms "comprise" and "comprising" also encompass the more restricted ones "consist" and "consisting".

The singular form "a", "an" and "the" include plural references unless the context clearly dictates otherwise. For example, "a compound of general formula I...", "a pharmaceutical composition", "a device" may refer, respectively, to at least one compound of general formula I, at least one pharmaceutical composition and at least one device.

A "mammal" refers to a rodent, canine, feline, bovine, equine, porcine and other livestock, deer, goats, sheep, mustelidae (such as, e.g. minx, ferret, ermine, ...) and human and non-human primates.

An "Alarm pheromone" or AP refers to cues secreted by threatened or injured conspecifics, used as an altruistic signal to protect their colony/group or family when in danger. These alert cues or alarm pheromones should be volatile, hydrophilic and short-lived molecules..

These molecules are expected to have low molecular weights and to be extremely volatile to allow fast diffusion from the source but a quick decline once the danger has past. These chemical properties make the identification task all the more difficult. In insects, most alarm pheromones have molecular weights of 200-300. Mice and other mammals increase the longevity of small volatile pheromones such as sex pheromones or territorial pheromones in associating them with urinary proteins which release them slowly.

The invention also relates to salts or solvates of the compound of general formula I. According to the present invention, the salts are produced from acidic inorganic or organic compounds, or alkaline inorganic or organic compounds. Examples of such salts may include sodium, potassium, calcium, aluminum, gold and silver salts. Also contemplated are salts formed with pharmaceutically acceptable amines such as ammonia, alkyl amines, hydroxyalkylamines, N-methylglucamine and the like.

Alternatively, these salts and/or solvates are pharmaceutically acceptable. As used herein, the phrase "pharmaceutically acceptable salt/solvates" refers to a salt or a solvate that retains the biological effectiveness of the free acids and bases of a specified compound and that is not biologically or otherwise undesirable.

Unless specified otherwise, it is further understood that all isomers, including enantiomers, stereoisomers, rotamers, tautomers and racemates of a compound of general formula I are contemplated as being part of this invention. The invention includes stereoisomers in optically pure form and in admixture, including racemic mixtures. Isomers can be prepared using conventional techniques, either by reacting optically pure or optically enriched starting materials or by separating isomers of compounds of the present invention.

### "Racemates" refers to a mixture of enantiomers.

"Stereoisomer" or "stereoisomers" refer to compounds that differ in the chirality of one or more stereocentres. Stereoisomers include enantiomers and diastereomers. The compounds of general formula I of this invention may exist in stereoisomeric form if they possess one or more asymmetric centres or a double bond with asymmetric substitution and, therefore, can be produced as individual stereoisomers or as mixtures. Unless otherwise indicated, the description is intended to include individual stereoisomers as well as mixtures. The methods for the determination of stereochemistry and the separation of stereoisomers are well-known in the art (see discussion in Chapter 4 of Advanced Organic Chemistry, 4th ed., J. March, John Wiley and Sons, New York, 1992).

"Tautomer" refers to alternate forms of a compound that differ in the position of a proton, such as enol-keto and imine-enamine tautomers.

A skilled person will know that, if a compound of general formula I of the invention contains charged group, a suitable counterion will be derived from an organic or inorganic acid. Such counterions include halide (such as chloride, bromide, fluoride, iodide), sulfate, phosphate, acetate, succinate, citrate, lactate, maleate, fumarate, palmitate, cholate, glutamate, glutarate, tartrate, stearate, salicylate, methanesulfonate, benzenesulfonate, sorbate, picrate, benzoate, cinnamate, and the like. If the polar moiety is a negatively charged group, a suitable counterion will be selected from sodium, ammonium, barium, calcium, copper, iron, lithium, potassium and zinc, and the like.

Preferably, the compound of general formula (I) is a compound of general formula

| | |
|---|---|
| I(a) | |
| | 2-*sec*-butyl-4,5-dihydro-1,3-thiazole (*also named SBT),* |
| 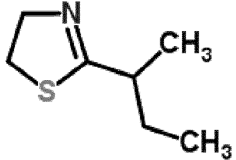 | |
| I(b) | |
| 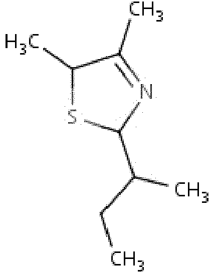 | 4,5-dimethyl-2-(sec-butyl)-2,5-dihydro-1,3-thiazole, |
| I(c) | |
| 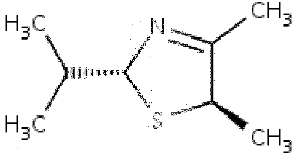 | (2R,5R)-4,5-dimethyl-2-(propan-2-yl)-2,5-dihydro-1,3-thiazole, |
| I(d) | |
| 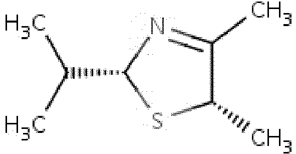 | (2R,5S)-4,5-dimethyl-2-(propan-2-yl)-2,5-dihydro-1,3-thiazole, |
| I(e) | |
| 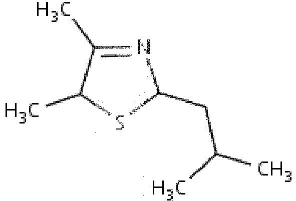 | 4,5-dimethyl-2-(2-methylpropyl)-2,5-dihydro-1,3-thiazole. |
| I(f) | |
| 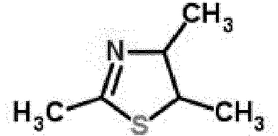 | 2,4,5-trimethylthiazoline *(also named TMT),* |
| I(g) | |
| 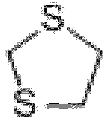 | 1,3-dithiolane *(also named 1,3-DT*)*.* |

Most preferably, the compound of general formula I is the compound 2-*sec*-butyl-4,5-dihydro-1,3-thiazole (also named SBT). From Applicants chemical, physiological and behavioral screenings, SBT came out as a mouse alarm pheromone. It was produced under different alarm conditions by both female and male mice of different ages. It acted as a danger signal on mice of both genders, inducing intracellular calcium increases in APs sensing GG neurons as shown on figure 3.

SBT activated the associated mitral/tufted and granule cells in the olfactory bulb. Its exposure lead to an increase in plasma corticosterone and to the subsequent display of innate fear related behaviors. SBT has been previously shown to induce inter-male aggression in mice in association with the pheromone DHB (14). This behavior was observed only when the synthetic SBT was added into urine. SBT could therefore be released in the environment as a volatile chemical and as a compound linked to the mouse major urinary proteins (Mups). Applicants showed that the volatile SBT signals a dangerous situation to a conspecific by initiating responses in GG neurons without association with mouse Mups while the Mups-linked SBT will give information as a long lasting message in the urine for sex-related indications that will be detected by VNO neurons (15).

The ability to detect the short-lived molecules encoding danger is essential for species survival. Molecules possessing the same chemical signature (heterocyclic sulfur or nitrogen-containing compounds) are emitted by predators (kairomones) and by stressed conspecifics (alarm pheromones); they induce similar innate fear reactions. In summary, our study shows that the chemical structure of danger cues refers to their specific coding quality and is deciphered by the Grueneberg ganglion neurons. It points to a double role for this olfactory subsystem in intra as well as interspecies communication of danger.

The present invention also considers the use of a compound of general formula I 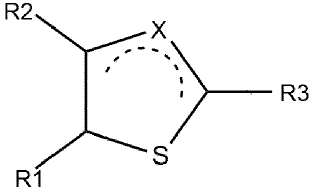 wherein X is N or S; R1, R2, and R3 are each independently selected from the group comprising H, (C₁-C₈)alkyl, substituted (C₁-C₈)alkyl, -CH₂OH, -CH2OCH₃, -CH2OCH2CH₃, - CH(OH)CH₂OH, or -(CH(OH))₃CH₂OH, or one of its salts, solvates, tautomers, isomers or of a composition such as a pharmaceutical composition containing said compound of general formula I, of the invention against an animal attacking humans inducing freezing or running away of the attacking animal. The use of said compound of general formula I or of a composition containing said compound of general formula I, as a pest control or to disperse crowd is also considered.

Preferably, the compound of general formula I, i.e. the alarm pheromone, will be administered to the animal by inhalation or by local application e.g. on the tip of the nose. However, other route of administration of the alarm pheromone of general formula I such as oral, subcutaneous, intravenous, intraarterial, intraperitoneal and intramuscular are also contemplated.

Most preferably, the alarm pheromone of general formula I will be administered to the animal by inhalation.

Thus, one additional aspect of the present invention is to provide a pharmaceutical composition containing a compound of general formula I 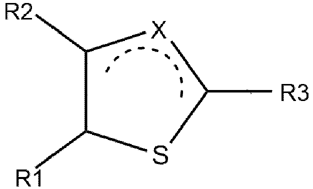 wherein X is N or S; R1, R2, and R3 are each independently selected from the group comprising H, (C₁-C₈)alkyl, substituted (C₁-C₈)alkyl, -CH2OH, -CH2OCH₃, - CH2OCH2CH₃, - CH(OH)CH₂OH, or -(CH(OH))3CH2OH, or one of its salts, solvates, tautomers, isomers , as an active pharmaceutical ingredient. The pharmaceutical agent or ingredient can be in a variety of well known general formula tions and administered using any of a variety of well known methods of administration such as intra-nasal, oral, subcutaneous, intravenous, intraarterial, intraperitoneal and/or intramuscular are also contemplated. Non-injectable general formula tions are preferred and intra-nasally or inhaled general formula tions are particularly preferred.

Pharmaceutical compositions adapted for nasal administration wherein the pharmaceutically acceptable carrier is a solid include a coarse powder having a particle size for example in the range 20 to 500 microns which is administered in the manner in which snuff is taken, e.g, by rapid inhalation through the nasal passage from a container of the powder held close up to the nose. Suitable compositions wherein the carrier is a liquid, for administration as a nasal spray or as nasal drops, include aqueous or oil solutions of the active ingredient.

Pharmaceutical compositions adapted for administration by inhalation include fine particle dusts or mists which may be generated by means of various types of metered dose pressurized aerosols, nebulizers or insufflators.

In cases where the compound of general formula I is included in a suspension, the general formula tion may contain suspending agents, as for example, ethoxylated isostearyl alcohols, polyoxyethylene sorbitol and sorbitan esters, microcrystalline cellulose, aluminum metahydroxide, bentonite, agar-agar and tragacanth, or mixtures of these substances, among others. Useful intranasal general formula tions of a compound of general formula I may contain a stabilizers and a surfactants. Among the pharmaceutically acceptable surfactants are polyoxyethylene castor oil derivatives, such as polyoxyethylene-glycerol-triricinoleate, also known as polyoxyl 35 caster oil (CREMOPHOR EL), or poloxyl 40 hydrogenated castor oil (CREMOPHOR RH40) both available from BASF Corp.; mono-fatty acid esters of polyoxyethylene (20) sorbitan, such as polyoxyethylene (20) sorbitan monolaurate (TWEEN 80), polyoxyethylene monostearate (TWEEN 60), polyoxyethylene (20) sorbitan monopalmitate (TWEEN 40), or polyoxyethylene 20 sorbitan monolaurate (TWEEN 20) (all available from ICI Surfactants of Wilmington, Del.); polyglyceryl esters, such as polyglyceryl oleate; and polyoxyethylated kernel oil (LABRAFIL, available from Gattefosse Corp.). Preferably, the surfactant will be between about 0.01 % and 10% by weight of the pharmaceutical composition. Among the pharmaceutically useful stabilizers are antioxidants such as sodium sulfite, sodium metabisulfite, sodium thiosulfate, sodium formaldehyde sulfoxylate, sulfur dioxide, ascorbic acid, isoascorbic acid, thioglycerol, thioglycolic acid, cysteine hydrochloride, acetyl cysteine, ascorbyl palmitate, hydroquinone, propyl gallate, nordihydroguaiaretic acid, butylated hydroxytoluene, butylated hydroxyanisole, alpha-tocopherol and lecithin. Preferably, the stabilizer will be between about 0.01% and 5% by weight of the pharmaceutical composition. Suspensions may also include chelating agents such as ethylene diamine tetraacetic acid, its derivatives and salts thereof, dihydroxyethyl glycine, citric acid and tartaric acid among others. Additionally, proper fluidity of a suspension can be maintained, for example, by the use of coating materials such as lecithin, by the maintenance of the required particle size in the case of dispersions and by the use of surfactants, such as those previously mentioned. Solid dosage forms for oral administration include capsules, tablets, pills, powders and granules. In such solid dosage forms, the active pharmaceutical ingredient may be mixed with at least one inert, pharmaceutically acceptable excipient or carrier, such as sodium citrate or dicalcium phosphate and/or (a) fillers or extenders such as starches, lactose, sucrose, glucose, mannitol and silicic acid; (b) binders such as carboxymethylcellulose, alginates, gelatin, polyvinylpyrrolidone, sucrose and acacia; (c) humectants such as glycerol; (d) disintegrating agents such as agar-agar, calcium carbonate, potato or tapioca starch, alginic acid, certain silicates and sodium carbonate; (e) solution retarding agents such as paraffin; (f) absorption accelerators such as quaternary ammonium compounds; (g) wetting agents such as cetyl alcohol and glycerol monostearate;(h) absorbents such as kaolin and bentonite clay; and (i) lubricants such as talc, calcium stearate, magnesium stearate, solid polyethylene glycols, sodium lauryl sulfate and mixtures thereof. In the case of capsules, tablets and pills, the dosage form may also comprise buffering agents.

Solid compositions of a similar type may also be employed as fillers in soft and hard-filled gelatin capsules using such excipients as lactose or milk sugar as well as high molecular weight polyethylene glycols and the like. The solid dosage forms of tablets, capsules, pills and granules can be prepared with coatings and shells such as enteric coating and other coatings well-known in the pharmaceutical general formula ting art. They may optionally contain opacifying agents and may also be of a composition such that they release the active ingredient(s) only, or preferentially, in a certain part of the intestinal tract, optionally, in a delayed manner. Examples of embedding compositions which can be used include polymeric substances and waxes.

Also envisioned are capsules or tablets slowly releasing the compound of general formula I in the environment useful in the case of pest control.

Liquid dosage forms for oral administration or for spray general formula tion include pharmaceutically acceptable emulsions, solutions, suspensions, syrups and elixirs. In addition to the active pharmaceutical ingredients, the liquid dosage forms may contain inert diluents commonly used in the art such as, for example, water or other solvents, solubilizing agents and emulsifiers such as ethyl alcohol, isopropyl alcohol, ethyl carbonate, ethyl acetate, benzyl alcohol, benzyl benzoate, propylene glycol, 1,3-butylene glycol, dimethyl formamide, oils (in particular, cottonseed, groundnut, corn, germ, olive, castor and sesame oils), glycerol, tetrahydrofurfuryl alcohol, polyethylene glycols and fatty acid esters of sorbitan and mixtures thereof.

This invention also envisages the use of a compound of general formula I in a pharmaceutically acceptable salt form. Examples of such salts may include sodium, potassium, calcium, aluminum, gold and silver salts. Also contemplated are salts formed with pharmaceutically acceptable amines such as ammonia, alkyl amines, hydroxyalkylamines, N-methylglucamine and the like.

Certain basic compounds also form pharmaceutically acceptable salts, e.g., acid addition salts. For example, pyrido-nitrogen atoms may form salts with strong acid, while compounds having basic substituents such as amino groups also form salts with weaker acids. Examples of suitable acids for salt formation are hydrochloric, sulfuric, phosphoric, acetic, citric, oxalic, malonic, salicylic, malic, fumaric, succinic, ascorbic, maleic, pamoic, methanesulfonic and other mineral and carboxylic acids well known to those skilled in the art. The salts are prepared by contacting the free base form with a sufficient amount of the desired acid to produce a salt in the conventional manner. The free base forms may be regenerated by treating the salt with a suitable dilute aqueous base solution such as dilute aqueous NaOH, potassium carbonate, ammonia and sodium bicarbonate. The free base forms differ from their respective salt forms somewhat in certain physical properties, such as solubility in polar solvents, but the acid and base salts are otherwise equivalent to their respective free base forms for purposes of the invention.

All such acid and base salts are intended to be pharmaceutically acceptable salts within the scope of the invention and all acid and base salts are considered equivalent to the free forms of the corresponding compounds for purposes of the invention.

Usually, the compound of general formula I as active pharmaceutical ingredient is present in an amount between about 0.001 % and 20% by weight of the pharmaceutical composition.

Further envisioned is a delivery device for providing a compound of general formula I 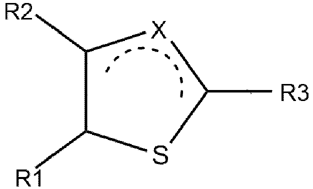 wherein R1, R2, R3 are each independently selected from the group comprising H, (C₁-C₈)alkyl, substituted (C₁-C₈)alkyl, -CH2OH, -CH2OCH3, -CH2OCH2CH3, -CH(OH)CH2OH, or -(CH(OH))3CH2OH, or one of its salts, solvates, tautomers, isomers the delivery device comprising a carrier device containing said compound of general formula I, the carrier device being structured for attachment to or positioning in proximity to a material or article commonly used in human or animal habitation, as described in patent application WO2012/162703 (which disclosure is incorporated herein). Alternatively, the delivery device can diffuse the compound of general formula I directly or trough a spraying system. Suitable materials can be fibrous, porous, solids, or flexible materials. Suitable materials may include such absorbent materials such as paper, porous plastics, absorbent minerals, carbon, and the like.

Usually, said carrier device is a textile that has been treated or impregnated with said compound of general formula I, said textile being sized to be received in a pervious enclosure.

The invention further relates to a composition for treating materials and articles used in human and animal habitation to provide animal dispersion of the treated materials and articles, the composition containing an effective amount of a compound of general formula I in accordance with the description *supra.*

The invention also relates to an *in-vivo* or *in-vitro* method for activating a Grueneberg Ganglion Neuron by contacting an alarm pheromone of the invention with said Grueneberg Ganglion Neuron.

The present invention also relates to methylpyrazines of general formula II 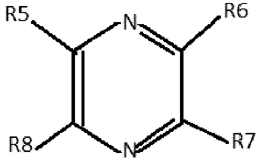 wherein R5, R6 and R7 are each independently selected from the group comprising H, (C₁-C₈)alkyl, substituted (C₁-C₈)alkyl, -CH2OH, -CH2OCH3, - CH2OCH2CH3, -CH(OH)CH2OH, or -(CH(OH))3CH2OH, or thietanes or general formula III 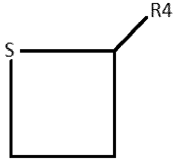 wherein R4 is selected from the group comprising H, (C₁-C₈)alkyl, substituted (C₁-C₈)alkyl, -CH2OH, -CH2OCH3, -CH2OCH2CH3, -CH(OH)CH2OH, or -(CH(OH))3CH2OH,
or one of their salts, solvates, tautomers, isomers for use as an alarm pheromone.

A further object of the present invention is to provide a pharmaceutical composition containing methylpyrazines of general formula II or thietanes of general formula III, as active pharmaceutical ingredient, and optionally in combination with one or more pharmaceutically acceptable carriers.

Another object of the invention concerns the uses of methylpyrazines of general formula II or thietanes of general formula III of the invention, or a pharmaceutical composition of the invention, against an animal attacking humans inducing freezing or running away of the attacking animal or as a pest control or to disperse crowd.

A delivery device for providing methylpyrazines of general formula II or thietanes of general formula III of the invention, the delivery device comprising a carrier device containing said alarm pheromone, the carrier device being structured for attachment to or positioning in proximity to a material or article commonly used in human or animal habitation.

Further object of the invention is to provide a carrier device treated or impregnated with methylpyrazines of general formula II or thietanes of general formula III of the invention.

Still a further object of the invention is to provide a composition for treating materials and articles used in human and animal habitation to provide animal dispersion of the treated materials and articles, the composition containing an effective amount of methylpyrazines of general formula II or thietanes of general formula III of the invention.

### EXAMPLES

### Example 1

### Animals and Tissue Preparation.

Male and female adult (> P21; post natal day 21) and young (P0 to P21) C57BL/6J and OMP-green fluorescent protein (GFP) gene-targeted mice (16) were used in a normal light cycle (12:12). The OMP-GFP mouse strain expresses GFP as a histological reporter under the control of the OMP promoter (16, 17). OMP is a mature olfactory-sensory neuron-specific marker (18). Animal care was in accordance with the Swiss legislation and the veterinary authority. The gender of the mice used was carefully considered for all analysis performed. Mice were killed by CO₂ or cervical dislocation. Nasal cavities were prepared in ice-cold artificial cerebrospinal fluid (ACSF), containing NaCl 118 mM, NaHCO₃ 25 mM, D-Glucose 10 mM, KCl 2 mM, MgCl₂ 2 mM, NaH₂PO₄ 1.2 mM and CaCl₂ 2 mM (pH 7.4) saturated with oxycarbon gas (95% O₂: 5% CO₂) under a fluorescence-equipped dissecting microscope (Wild M10, Leica).

### SPME-GC/MS Analysis.

A solid phase microextraction (SPME) followed by a gas chromatography coupled to mass spectrometry (GC/MS) method was used to collect and analyze volatile compounds released by mice (n = 47 experiments). In summary, a sequence of three protocols was performed aiming at, first collecting the volatile contaminants present in the experimental environment, second collecting the mouse volatiles released by mice under non-alarm conditions and third collecting the volatiles released by mice under alarm conditions (CO₂ euthanasia, confinement stress, cold stress). Experiments were performed on separate groups of either 5 males, 5 females or mixes of 5 male and female mice (3:2) C57BL/6J and OMP-GFP aged from P23 to P150. A PDMS-DVB fiber (polydimethylsiloxane-divinylbenzene portable field sampler of 60 µm film thickness; Supelco) was positioned at the top of an airtight plexiglas chamber (38.5 x 11.5 x 15 cm). In order to detect the presence of contaminants, volatile compounds from the empty cage were first collected as follows: the SPME fiber was engaged in the chamber simultaneously with a 5 min artificial airflow generated via a tubing system and compressed gas. Once the flow was over, the fiber stayed for an extra 25 minutes. It was then pulled back into its manual holder. Following the same procedure, the volatiles emitted by mice were collected under non-alarm conditions by using mice under anesthesia (pentobarbital sodium, 50 mg/kg in IP injection) in order to avoid any stress generated by the new social interactions or the restraint environment (n = 4 experiments); the mice had been previously handled and trained in order to minimize environmental stress. Three different alarm conditions were then used, a lethal CO₂ stress, a confinement stress and a cold stress (5, 19, 20). Briefly, for the confinement stress, mice were restrained in a small chamber (11.5 x 10.0 x 10.0 cm) and, for the cold stress, mice were placed with their feet on refrigerated cold packs. To discard the long-lasting chemicals present in the mouse scent, we performed a separate set of experiments, where we collected the chemicals emitted by dead mice 30 minutes after their CO₂ euthanasia. Qualitative analyses of the extracted components present on the fibers were performed using an Agilent 6890 Plus GC coupled with a HP 5973N selective mass detector and an MSD Chem Station software. The SPME fiber extracts were desorbed in the injector for 5 min at 250°C in splitless mode. The oven was set at an initial temperature of 40°C and ran for 20 min until 250°C. The mass spectrometer was operated in the full-scan mode between 10 amu and 300 amu. The column used was an Agilent DB-XLB (30 m length, 0.25 mm I.D. and 0.25 µm film thickness) with helium 5.0 as carrier gas. Injection of reference standards, when commercially available, was used to confirm the presence of known pheromones. WileyN7 and NIST08 Mass Spectral libraries were used for chemical identification. Characteristic m/z values for each volatile of interest were obtained from reference spectra and used to verify the presence of the corresponding compound in the different tested conditions. These values also allow final identification of the emitted volatiles. To estimate the concentration of SBT emitted by mice during the different alarm conditions (CO₂ euthanasia, confinement stress and cold stress), we adapted a protocol from (21). We first estimated the relative abundance of the SBT specific ion (m/z =128) at a retention time 9.875 min when 1 ml of SBT (1:1000) was added in the center of the airtight cage for 30 min in the presence of the fiber. This value was then used to normalize the SBT specific ion (m/z = 128) at the retention time 9.875 min measured under experimental conditions and to estimate the concentration of SBT released by the synthetic chemical or by the mice. The same procedure was done for the other tested cues.

### Calcium Imaging of Olfactory Subsystems in Tissue Slice Preparations.

Calcium imaging experiments were performed on GG, MOE and VNO acute slice preparations from female and male mice (P0 to P60) (5, 22). Briefly, the superior anterior part of the head was collected and rinsed in cold ACSF. The tip of the head was embedded in 3-5% low-melting agar prepared in PBS (NaCl 138 mM, KCl 2.7 mM, KH₂PO₄ 0.9 mM and Na₂HPO₄ 0.8 mM, pH 7.6) and transferred on ice for solidification. The agar block was then fixed with cyanacrylat glue onto the holder of the vibratome (VT1200S, Leica) and coronal slices from 60 µm to 120 µm were then processed in cold oxygenated ACSF. Slices were selected with a fluorescence-equipped dissecting microscope (Wild M10, Leica). Multiple slices could be obtained from one mouse. Selected slices were loaded with Fura-2AM (5 µM; TEFLABS) and pluronic acid (0.1%; Pluronic F-127, Invitrogen) in an incubator for a minimum of 45 min (37°C, 5% CO₂). Slices were then placed in the bath chamber (RC-26, Warner Instruments) and immobilized with a slice anchor. Observations were done under an inverted fluorescence microscope set-up (Axiovert 135, Zeiss) with a 25x or 63x objective and Cool SNA-HQ camera. A bipolar temperature controller (SC-20 / CL-100, Warner instruments) was used to control the bath temperature (23°C to 25°C). The software MetaFluor (MetaFluor, Visitron Systems) was used to monitor intracellular calcium and to acquire images (22). Intracellular calcium changes induced by chemical cues were standardized by the response to KCl (20 mM) in each cell. Fura-2AM ratio observed during the perfusion of ACSF was considered as baseline activity; it corresponded to ~5% of a KCl response. Calcium increases twice larger than this baseline activity (10% of the KCl response) were considered as responses.

### Chemostimulation with Commercially Available or Synthesized Odorant Cues.

Preparation of DHB (dehydro-exo-brevicomin) was done by bromination followed by an elimination reaction (23) from commercial exo-brevicomin (Contech). Racemic synthesis of mouse pheromone SBT (2-sec-butyl-4,5-dihydrothiazole) was performed in a 2 step way (24) and controlled by H NMR and GC/MS. Volatile odorants found in the anal glands, feces or urines of *Carnivora* (please see the table below) such as methylthiazoles (TMT: 2,4,5-trimethylthiazoline), methylpyrazines (2,6-DMP: 2,6-dimetylpyrazine; 2,3-DMP: 2,3-dimethylpyrazine), dithiolanes (1,3-DT: 1,3-dithiolane) and thietanes (TS: trimethylene sulfide; 2-PT: 2-propylthietane) were used as synthetic predator cues and obtained from Sigma-Aldrich or Contech. Odorant cues were prepared fresh before each experiment by direct dilution in ACSF (10⁻³-10⁻⁹ M).

| **Family** | **Predator name *(Species)*** | **Principal cues** |
|---|---|---|
| Mustelidae | Stoat (*Mustela erminea)* | Thietanes, Dithiolanes (3, 25) |
| Mustelidae | Weasel (*Mustela nivalis)* | Thietanes (3, 26) |
| Mustelidae | Ferret *(Mustela putorius* f. *furo)* | Thietanes, Dithiolanes (3, 25) |
| Mustelidae | Mink *(Mustela vison)* | Thietanes, Dithiolanes (3, 27) |
| Canidae | Red fox (*Vulpes vulpes)* | Dithiolanes, Methylthiazoles (3, 28) |
| Canidae | Coyote *(Canis latrans)* | Methylpyrazines (29) |
| Felidae | Bobcat (*Lynx rufus)* | Methylpyrazines (30) |

### Plasma Corticosterone Assay.

Plasma corticosterone levels were evaluated by using the Corticosterone EIA Kit (Enzo Life Sciences). For each tested cues (ACSF, SBT, APs, TMT and BA used here, as an aversive control substance which does not induce any hormonal increase (31)), a minimum of 6 adult OMP-GFP mice (P45 to P55; 1:1, females:males) were used. APs were collected as a blend from the environment of stressed mice before each experiment (5). Briefly, after a 5 days habituation phase to minimize environmental stress, mice were placed in contact with the tested cue (5 µl on a blotting paper) for 15 min in an airtight cage (31 x 15 x 14 cm). Mice were then directly anesthetized with isoflurane (50 s), the blood samples were collected and centrifuged at RT during 5 min at 10,000 rpm. Plasmas were kept at -80°C until Elisa analysis. Corticosterone levels were measured in duplicate in accordance with the kit manufacturer.

### Immunohistochemistry and olfactory bulb activities labeling.

Adult OMP-GFP male or female mice (P21 to P29, a minimum of two animals per conditions) were placed individually in a clean airtight cage for one hour habituation, olfactory stimulations were done by using 25 µl of SBT or TMT (at 1:100 or 1:100,000 in ACSF solution corresponding to estimated concentrations of 10⁻³ M or 10⁻⁷ M in the air, as determined by SPME-GC/MS) directly added on a blotting paper in the airtight cage for one additional hour. For control experiments, the same procedure was performed using ACSF alone. The protocol for floating immunohistochemistry on sagittal sections from the olfactory bulb was adapted from (22). Briefly, the olfactory bulb was delicately dissected and fixed in PAF 4 % (paraformaldehyde 4%, pH 7.4) at 4 °C for 3 hours. Tissue was embedded in 3 % low-melting agar (A7002, Sigma) and 120 µm sagittal sections were cut in PBS using a vibroslicer (VT1200S, Leica). Slices were then blocked for 3 hours at RT in a PBS solution containing NGS (normal goat serum, Jackson ImmunoResearch) 10 % and triton X-100 0.5 %. The first primary antibody anti-phosphodiesterase 2A (PDE2A; 1:400, Rabbit, FabGennix) was applied to the slices for 16 hours at RT in a PBS solution containing NGS 5 % and Triton X-100 0.25 % and was used for specific labeling of the necklace glomeruli (7). Slices were then washed in NGS 2 % and incubated in the dark with the first secondary antibody, Cy3 (Cy3-conjugated AffiniPure anti-Rabbit; 1:200, Goat, Jackson ImmunoResearch), in NGS 2 % for 2 hours at RT. In order to visualize the mitral/tufted and granule cell activation, a c-Fos labeling was performed (32). To limit cross-labeling, an additional blocking phase using 5 % NRS (normal rabbit serum, Jackson ImmunoResearch) and goat anti-rabbit IgG (1:100; Goat anti-rabbit IgG (H+L), Jackson ImmunoResearch) was used. After a series of washing, slices were then incubated with the second primary antibody anti-c-Fos (Anti-c-Fos (Ab-5), 1:600, Rabbit, Calbiochem) for 36 hours at RT in NGS 2 % and washed. Slices were then incubated in the dark with the second secondary antibody, Cy5 (Cy5-conjugated AffiniPure anti-Rabbit; 1:200, Goat, Jackson ImmunoResearch). After washing, slices were then mounted in Vectashield (Vector laboratories) with DAPI mounting medium. Observations and acquisitions were made by stereofluorescence microscopy (MZ16FA, Leica) and confocal microscopy (SP5, Leica) with 2 x or 40 x objectives. Post-analysis and reconstructions were made with Imaris (Bitplane IMARIS 6.3).

### Generation of Axotomized Mice and Behavioral Assays.

Axonal projection bundles of GG neurons from OMP-GFP female and male mice were sectioned using disposable 26G needles under deep isoflurane anesthesia (5). The behavioral experiments were performed 30 days post lesion. Mice were housed in isolated cages 4 days before the beginning of the tests. They were given food and water *ad libitum.* Room temperature was maintained at 21°C. Behavioral experiments were performed during the dark phase of a 12:12 h light/dark cycle. They were recorded on HD camera and subsequently analyzed offline by an author who was unaware of the phenotype of the mice. Animals were used to handing and familiar with the test arena (a closed plexiglas box of 45 x 25 x19 cm) and to the presence of ACSF on a piece of blotting paper to minimize environmental stress. Mice were transferred to the test arena. The risk assessment, the freezing duration and the total walking distance were evaluated in the presence or absence of the olfactory cues in ACSF (SBT, TMT, 2-PT and BA; 25 µl at a dilution of 1:100 on a blotting paper, corresponding to an estimated concentration of SBT in the air of 10⁻³ M as determined by SPME-GC/MS). According to previous studies, this dilution is necessary to observe stereotypical fear-related behaviors similar to those obtained with natural fox feces odor without activating unspecific trigeminal pathways. Mice were exposed only once to each tested cues. Freezing was defined as the time where the animal was immobile with only respiratory movements. For the total walking distance, the first 3 min of the session were used. The general olfactory function of the mice was assessed after a food deprivation of 16 hours after which an Oreo cookie was buried in the home cage of the subject under 1 cm of bedding. The location of the cookie systematically varied across days. Experiments were performed on 3 consecutive days. Latency to find the cookie was measured (5). The degeneration of the GG was observed at the end of the behavioral assays after whole mount preparations under a fluorescence stereomicroscope (MZ16FA, Leica). Mice with intact GG were considered as the control group (Ctrl; *n* = 6) and mice with a complete degeneration of the GG (absence of GFP-positive cells) as the axotomized group (Axo; *n* = 6). No differences were observed between untreated and our Ctrl mice (5).

### Statistical Analyses.

### Values are expressed as mean ± standard error of the mean (SEM). For the plasma

corticosterone assay and the evaluation of olfactory function, the unilateral Student's unpaired t test was used. For the behavioral assays, the unilateral Student's paired *t* test was performed for comparisons. Significance levels are indicated as follow: * P < 0.05; ** *P* < 0.01; *** *P* < 0.001; ns: not significant. *n* = number of cells if not otherwise mentioned.

### Example 2

### Chemical Extraction of Mouse Volatiles.

The Applicants used solid phase microextraction (SPME) fibers to adsorb the volatile mouse APs released under a CO₂ alarm condition. After extraction these molecules were analyzed by gas chromatography coupled to mass spectrometry (GC/MS) (Fig. 1*A*, Fig. 5). A total of forty-four mouse volatiles were detected (Fig. 1*B*) among which we found pheromones important for social interactions such as 2-heptanone or α- and β-farnesene (4)(Fig. 6). Thirty-two out of these forty-four volatile chemical cues were also emitted by control mice (under non-alarm condition). Of the twelve chemicals appearing only under alarm condition (Fig. 1*B*, underlined), eight were of transient nature thereby fulfilling an important chemical criterion of volatile alarm cues. They could thus be considered as APs candidates. Among these eight APs candidates, we found five compounds listed in the chemical libraries namely, 1,2-Propanediol, Butyric acid (BA), Pentanoic acid, Dehydro-exo-brevicomin (14) (DHB) (Fig. 2), 2-sec-butyl-4,5-dihydrothiazole (14) (SBT) (Fig. 7 A-B) and three unlisted chemicals. The identified chemicals were then purchased if commercially available or in house synthesized (Fig. 7C) in order to test by calcium imaging whether they could activate mouse GG neurons.

### Identification of a Mouse Alarm Pheromone.

We performed calcium imaging experiments on GG coronal slices (5) of a particular gene-targeted mouse strain called OMP-GFP (olfactory marker protein-green fluorescent protein) in which all olfactory neurons express GFP as a reporter gene (16, 17). Tissue slices were incubated in the calcium-sensitive dye Fura-2 acetoxymethyl ester. GG neurons were identified by the intrinsic green fluorescence of GFP in their cell bodies and by their specific morphology (Fig. 2A). The uptake of the dye was confirmed by fluorescence measurements (Fig. 2*B*). Candidate alarm cues were delivered in oxycarbonated artificial cerebrospinal fluid (ACSF) on the tissue slices in the imaging chamber (Fig. 2C). Four out of five APs candidates did not activate GG neurons (1,2-Propanediol, *n* = 0/28 neurons tested; BA, *n* = 0/19; Pentanoic *acid, n* = 0/27; DHB, *n* = 0/53). Perfusion of SBT, on the other hand, induced in GG neurons, both in female and male mice tissue slice preparations, reversible and reproducible calcium transients (n = 36/50) (Fig. 2 C-D; Fig. 8 A-C). In a separate set of experiments, we could verify that SBT activated the same GG neurons as the blend of mouse APs *(n* = 9/9) (Fig. 8D-E). Calcium responses were observed at different concentrations of SBT (Fig. 2*E*) allowing the estimation of an EC₅₀ value in the micromolar range *(n* = 7) (Fig. 2*F*). Interestingly, SBT was produced by mice undergoing different alarm conditions: a lethal CO₂ stress, a confinement stress or a cold temperature stress (Fig. 9 A-C). The estimated SBT concentration released during these different alarm conditions was also in the micromolar range (Fig. 9*C*). In addition, we find SBT to be released under alarm conditions by both male and female mice (Fig. 9 D-H). Together, these data suggested that SBT could be a candidate molecule for carrying the danger signal.

We tested this hypothesis by exposing adult male and female mice to this putative alarm cue and found that it induced a significant elevation of their plasma corticosterone levels indicating a systemic stress response (Fig. 2G). Indeed SBT alone could fully reproduce, in both genders (Fig. 10), the systemic stress response that was also generated by the blend of APs collected under alarm condition (Fig. 1*A*). Thus, from these experiments SBT came out as our best candidate mouse alarm pheromone.

### Alarm Pheromones and Predator Scents Sharing a Common Chemical Structure activate Grueneberg Ganglion Neurons.

Interestingly, SBT shares its chemical structure with a different class of odorant molecules also involved in danger communication: the molecules found in rodent predator scents (21) (Fig. 2 *C and H*). These molecules are often the only warning a prey has that a predator is nearby. They include a class of heterocyclic sulfur or nitrogen-containing compounds generated by meat digestion. To these belongs 2,4,5-trimethylthiazoline (TMT), a component of fox (*Vulpes vulpes)* feces (28) which is well known for its fear inducing properties (33), (Fig. 2*G*).

Using calcium imaging, we found that TMT also induced an intracellular calcium increase in GG neurons of both female and male mice (*n* = 33/34; Fig. 2*H*). We further tested other representatives of this class of molecules at 10⁻³-10⁻⁹ M and found that each one activated GG neurons. Among these were methylpyrazines (2,3-DMP (*n* = 39/39) or 2,6-DMP (*n* = 39/40)), dithiolanes (1,3-dithiolane (1,3-DT) (*n* = 18/19)), thietanes (trimethylene sulfide (TS) (*n =* 17/22)) and 2-propylthietane (2-PT; *n* = 30/30), which is secreted by the anal glands of a mouse predator, the stoat (*Mustela erminea*) (Fig. 2*H*). Thus, volatile danger cues, which share similar chemical structures, released either by predators (kairomones) or by a conspecific (APs) activate GG neurons.

### Olfactory Subsystem Specificity of Chemical Danger Cues.

Most of these GG ligands have, for humans, a strong and aversive smell. In the mouse, odorants as well as pheromones are often recognized by more than one olfactory subsystem (Fig. 3*A*). To verify if this applied for SBT, TMT and 2-PT, we perfused these substances on the neurons of the different subsystems of the mouse, the main olfactory epithelium (MOE) as well as the vomeronasal organ (VNO), besides neurons of the GG (Fig. 3 B-E). We found that SBT, TMT and 2-PT could be detected by MOE and VNO neurons but that the GG comprised the highest proportion of responsive neurons. Indeed, over seventy percent of the GG neurons responded to these alert cues suggesting that this olfactory subsystem might play a role not only in the detection of these odorant molecules but more importantly in the perception of the danger quality of these substances (Fig. 3*B*).

### The Danger Quality of a Chemical Cue is Deciphered by a Functional Grueneberg Ganglion.

The axonal projection bundles of GG neurons reach the olfactory bulb of the brain in a phosphodiesterase (PDE2A) positive necklace glomerular region (NG) (7) (Fig. 11 A-B). We found, by c-Fos labeling, that mice exposed to SBT or to the predator cue TMT (10⁻³ or 10⁻⁷ M) have their NG-associated mitral/tufted and granule cells activated (Fig. 11 C-E). Thus these chemical cues might transfer their danger signal to the brain via GG axonal afferences. These GG projection bundles can be sectioned (axotomy) inducing the complete degeneration of the ganglion and the generation of Axo mice (5). Typical freezing reactions as well as a decrease in walking distance have been observed previously in the presence of danger cues (APs and predator kairomones) (5, 33). To test the behavioral relevance of the specific GG recognition of chemical danger cues, we ran a set of experiments scoring the freezing time, the walking distance and the risk assessment episodes performed by mice with or without a functional GG (Ctrl versus Axo mice) (Fig. 4A, Fig. 12).

We found that the candidate alarm pheromone, SBT, as well as the predator kairomones, TMT and 2-PT induced stereotypical fear reactions in Ctrl mice (Fig. 4*A*). SBT can therefore be considered as the first identified mouse alarm pheromone. After GG axonal lesions (Axo mice) (Fig. 4*B*), the general odorant detection of the mice was not affected as no difference was observed in their ability to localize a hidden Oreo cookie (5) (Fig. 4*C*). Moreover, in these Axo mice, the presence of SBT, TMT or 2-PT induced a high score of risk assessment episodes confirming that the general detection of these odorants via the MOE and the VNO was indeed conserved (Fig. 3*B*). On the contrary, the fear-induced behaviors were replaced by exploratory activity (Fig. 4*A*). A functional GG is therefore necessary to perceive the danger signaling properties of these chemically related substances.

### REFERENCES

1. Kavaliers M & Choleris E (2001) Antipredator responses and defensive behavior: ecological and ethological approaches for the neurosciences. Neurosci Biobehav Rev 25(7-8):577-586.
2. Conover MR (2007) Predator-prey dynamics: the role of olfaction (CRC Press).
3. Apfelbach R, Blanchard CD, Blanchard RJ, Hayes RA, & McGregor IS (2005) The effects of predator odors in mammalian prey species: a review of field and laboratory studies. Neurosci Biobehav Rev 29(8):1123-1144.
4. Wyatt TD (2003) *Pheromones and animal behaviour: communication by smell and taste* (University of Oxford, Cambridge, United Kingdom).
5. Brechbühl J, Klaey M, & Broillet MC (2008) Grueneberg ganglion cells mediate alarm pheromone detection in mice. Science 321(5892):1092-1095.
6. Gruneberg H (1973) A ganglion probably belonging to the N. terminalis system in the nasal mucosa of the mouse. Z Anat Entwicklungsgesch 140(1):39-52.
7. Matsuo T, Rossier DA, Kan C, & Rodriguez I (2012) The wiring of Grueneberg ganglion axons is dependent on neuropilin 1. Development 139(15):2783-2791.
8. Roppolo D, Ribaud V, Jungo VP, Luscher C, & Rodriguez I (2006) Projection of the Gruneberg ganglion to the mouse olfactory bulb. Eur J Neurosci 23(11):2887-2894.
9. Mamasuew K, et al. (2011) Chemo- and Thermosensory Responsiveness of Grueneberg Ganglion Neurons Relies on Cyclic Guanosine Monophosphate Signaling Elements. Neurosignals 19(4):198-209.
10. Koos DS & Fraser SE (2005) The Grueneberg ganglion projects to the olfactory bulb. Neuroreport 16(17):1929-1932.
11. Fuss SH, Omura M, & Mombaerts P (2005) The Grueneberg ganglion of the mouse projects axons to glomeruli in the olfactory bulb. Eur J Neurosci 22(10):2649-2654.
12. Storan MJ & Key B (2006) Septal organ of Gruneberg is part of the olfactory system. J Comp Neurol 494(5):834-844.
13. Fleischer J, Hass N, Schwarzenbacher K, Besser S, & Breer H (2006) A novel population of neuronal cells expressing the olfactory marker protein (OMP) in the anterior/dorsal region of the nasal cavity. Histochem Cell Biol 125(4):337-349.
14. Novotny M, Harvey S, Jemiolo B, & Alberts J (1985) Synthetic pheromones that promote inter-male aggression in mice. Proc Natl Acad Sci USA 82(7):2059-2061.
15. Cavaggioni A, Mucignat-Caretta C, Redaelli M, & Zagotto G (2006) The scent of urine spots of male mice, Mus musculus: Changes in chemical composition over time. Rapid Commun Mass Spectrom 20(24):3741-3746.
16. Potter SM, et al. (2001) Structure and emergence of specific olfactory glomeruli in the mouse. J Neurosci 21(24):9713-9723.
17. Mombaerts P, et al. (1996) Visualizing an Olfactory Sensory Map. Cell 87(4):675-686.
18. Margolis FL (1972) A brain protein unique to the olfactory bulb. Proc Natl Acad Sci USA 69(5):1221-1224.
19. Retana-Marquez S, Bonilla-Jaime H, Vazquez-Palacios G, Martinez-Garcia R, & Velazquez-Moctezuma J (2003) Changes in masculine sexual behavior, corticosterone and testosterone in response to acute and chronic stress in male rats. Hormones and behavior 44(4):327-337.
20. Grauer E, Alkalai D, Kapon J, Cohen G, & Raveh L (2000) Stress does not enable pyridostigmine to inhibit brain cholinesterase after parenteral administration. Toxicol Appl Pharmacol 164(3):301-304.
21. Ferrero DM, et al. (2011) Detection and avoidance of a carnivore odor by prey. Proc Natl Acad Sci USA 108(27):11235-11240.
22. Brechbühl J, Luyet G, Moine F, Rodriguez I, & Broillet MC (2011) Imaging Pheromone Sensing in a Mouse Vomeronasal Acute Tissue Slice Preparation. J Vis Exp 58 (e3311).
23. Frey U, Hinderling C, Naef O, & Shahgaldian P (2011) Applied R&D at the Universities of Applied Sciences. CHIMIA 65(7):621-624.
24. Tashiro T & Mori K (1999) Synthesis of the Enantiomers of 2-sec-Butyl-4,5-dihydrothiazole and (1R,5S,7R)-3,4-Dehydro-exo-brevicomin, Pheromone Components of the Male Mouse, Mus musculus. European Journal of Organic Chemistry 1999(9):2167-2173.
25. Crump D & Moors P (1985) Anal gland secretions from the stoat (mustela erminea) and the ferret (mustela putorius forma): some additional thietane components. J Chemic Ecol 11(8):1037-1043.
26. Zhang JX, et al. (2002) Volatile compounds in anal gland of Siberian weasels (Mustela sibirica) and steppe polecats (M. eversmanni). J Chem Ecol 28(6):1287-1297.
27. Schildknecht H, Wilz I, Enzmann F, Grund N, & Ziegler M (1976) Mustelan, the malodorous substance from the anal gland of the mink (Mustela vison) and the polecat (Mustela putorius). Angew Chem Int Ed Engl 15(4):242-243.
28. Vernet-Maury E, Polak E, & Demael A (1984) Structure-activity relationship of stress-inducing odorants in the rat. J Chem Ecol 10(7):1007-1018.
29. Guilford T, Nicol C, Rothschild M, & Moore BP (1987) The biological roles of pyrazines: evidence for a warning odour function. Biological Journal of the Linnean Society 31(2):113-128.
30. Mattina MJI, Pignatello JJ, & Swihart RK (1991) Identification of volatile components of bobcat (Lynx rufus) urine. J Chem Ecol 17(2):451-462.
31. Endres T & Fendt M (2009) Aversion- vs fear-inducing properties of 2,4,5-trimethyl-3-thiazoline, a component of fox odor, in comparison with those of butyric acid. The Journal of experimental biology 212:2324-2327.
32. Bepari AK, Watanabe K, Yamaguchi M, Tamamaki N, & Takebayashi H (2012) Visualization of odor-induced neuronal activity by immediate early gene expression. BMC neuroscience 13(1):140.
33. Kobayakawa K, et al. (2007) Innate versus learned odour processing in the mouse olfactory bulb. Nature 450(7169):503-508.

## Claims

1. A compound of general formula I 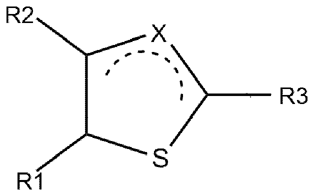 wherein X is N or S; R1, R2, and R3 are each independently selected from the group comprising H, (C₁-C₈)alkyl, substituted (C₁-C₈)alkyl, -CH₂OH, -CH2OCH₃, -CH2OCH2CH₃, - CH(OH)CH₂OH, or -(CH(OH))3CH2OH, or one of its salts, solvates, tautomers, isomers for use as an alarm pheromone.

2. The compound of claim 1 wherein the compound of general formula I is a compound of general formula
| | |
|---|---|
| I(a) | |
| 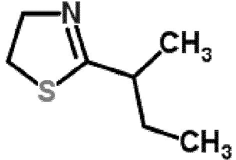 | 2-*sec*-butyl-4,5-dihydro-1,3-thiazole (also named SBT), |
| I(b) | |
| | 4,5-dimethyl-2-(sec-butyl)-2,5-dihydro-1,3-thiazole, |
| 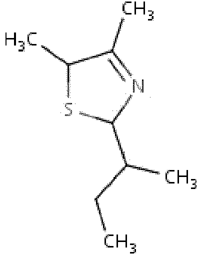 | |
| I(c) | |
| 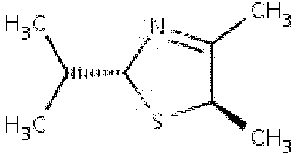 | (2R,5R)-4,5-dimethyl-2-(propan-2-yl)-2,5-dihydro-1,3-thiazole, |
| I(d) | |
| 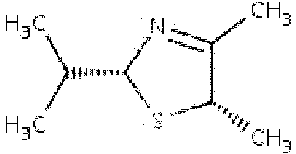 | (2R,5S)-4,5-dimethyl-2-(propan-2-yl)-2,5-dihydro-1,3-thiazole, |
| I(e) | |
| 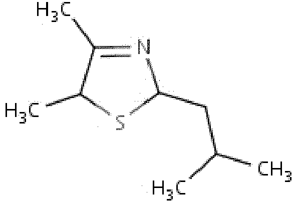 | 4,5-dimethyl-2-(2-methylpropyl)-2,5-dihydro-1,3-thiazole, |
| I(f) | |
| 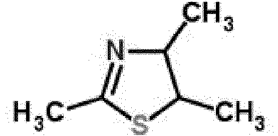 | 2,4,5-trimethylthiazoline (also named TMT), |
| I(g) | |
| 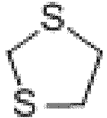 | 1,3-dithiolane (also named 1,3-DT). |

3. A pharmaceutical composition containing an alarm pheromone of claim 1 or 2 as active pharmaceutical ingredient, and optionally in combination with one or more pharmaceutically acceptable carriers.

4. The pharmaceutical composition of claim 3 which is adapted for inhalation, intra-nasal, oral, subcutaneous, intravenous, intraarterial, intraperitoneal or intramuscular administration.

5. Use of an alarm pheromone of claim 1 or 2, or a pharmaceutical composition of claim 3 or 4, against an animal attacking humans inducing freezing or running away of the attacking animal.

6. Use of an alarm pheromone of claim 1 or 2, or a pharmaceutical composition of claim 3 or 4, as a pest control

7. Use of an alarm pheromone of claim 7, or a composition of claim 12, or a pharmaceutical composition of claims 13 to 14 to disperse crowd.

8. A delivery device for providing an alarm pheromone of any of claims 1-2, the delivery device comprising a carrier device containing said alarm pheromone, the carrier device being structured for attachment to or positioning in proximity to a material or article commonly used in human or animal habitation.

9. The delivery device of claim 8, wherein said carrier device is a textile that has been treated or impregnated with said alarm pheromone, said textile being sized to be received in a pervious enclosure.

10. A carrier device treated or impregnated with an alarm pheromone of any of claims 1-2.

11. The carrier device of claim 10, wherein said carrier device is a textile.

12. A composition for treating materials and articles used in human and animal habitation to provide animal dispersion of the treated materials and articles, the composition containing an effective amount of an alarm pheromone of any of claims 1-2.
